# EUROPÄISCHE PATENTSCHRIFT

(11) **EP 2 548 731 B1**
(45) Veröffentlichungstag und Bekanntmachung des Hinweises auf die Patenterteilung: **03.09.2014**
(21) Anmeldenummer: 12177041.6
(22) Anmeldetag: 19.07.2012
(51) Int. Cl.: B32B 17/10, B32B 27/06, B32B 27/08, C08F 8/28, C08L 29/14

(54) **Hochfeste Folienlaminate mit Schichten von weichmacherhaltigem Polyvinyl(n)acetal und weichmacherhaltigem Polyvinyl(iso)acetal**
High-strength film laminates with layers of polyvinyl(n)acetal containing plasticizers and polyvinyl(iso)acetal containing plasticizers
Laminés de pellicules hautement résistants dotés de couches de polyvinyle(n)acétal comprenant du plastifiant et polyvinyle(iso)acétal comprenant du plastifiant

(30) Priorität: 22.07.2011 EP 11175080
(43) Veröffentlichungstag der Anmeldung: 23.01.2013
(73) Patentinhaber: Kuraray Europe GmbH, 65795 Hattersheim (DE)
(72) Erfinder: Frank, Michael, Dr., 55129 Mainz (DE); Keller, Uwe, Dr., 53177 Bonn (DE); Beekhuizen, Jan, Dr., 53844 Troisdorf (DE); Steuer, Martin, Dr, 65835 Liederbach (DE); Meise, Markus, Dr., 68259 Mannheim (DE)
(74) Vertreter: Kisters, Michael Marcus

(56) Entgegenhaltungen:
- US-A1- 2007 014 976

## Beschreibung

### Technisches Gebiet

Die Erfindung betrifft ein z.B. als Zwischenschicht in Verbundsicherheitsgläsern geeignetes Folienlaminat, das aus mindestens drei Schichten auf der Basis von weichmacherhaltigen Polyvinyl(n)acetalen und/oder Polyvinyl(iso)acetalen aufgebaut ist und gute Penetrationseigenschaften aufweist.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiges Polyvinylbutyral (PVB) verwendet, erhältlich aus der Umsetzung von Polyvinylalkohol mit n-Butyraldehyd.

Ein immer wichtiger werdendes Merkmal von Verbundverglasungen ist deren Penetrationsfestigkeit d.h. deren Widerstandsfähigkeit gegenüber äußerer Krafteinwirkung. Dies kann durch eine dickere Glasscheibe, aber auch durch entsprechende Zwischenschichtfolien eingestellt werden. So sind z.B. sog. "Hurricane-proof" Verglasungen bekannt, die verbesserten Schutz gegen umherfliegende Objekte bieten. Hierzu werden in der Regel dickere Standardfolien aus PVB eingesetzt, was aber die Transparenz der Verglasung herabsetzt. Zudem ist eine dickere Verglasung auf Grund der limitierten Einbautiefe und der höheren Kosten unerwünscht.

Weiterhin können zur Verbesserung der Penetrationsfestigkeit von Verbundverglasungen mechanisch stabilere Folien z.B. aus PET oder PU zwischen zwei PVB-Folien einlaminiert werden. Dies bedeutet aber einen zusätzlichen Verarbeitungsschritt und birgt die Gefahr von unerwünschter Delamination.

Allgemein kann die mechanische Festigkeit von PVB-Folien durch deren Weichmachergehalt oder den Anteil an Polyvinylalkohol- oder Polyvinylacetatgruppen im eingesetzten Polyvinylacetal eingestellt werden.

So beschreiben z.B. US 5,340,654 oder WO 2006/102049 Mehrschichtsysteme, bei dem eine erste Schicht ein Polyvinylbutyral mit einem hohen Restacetatgehalt und eine zweite Schicht mit einem Polyvinylbutyral mit einem niedrigen Restacetatgehalt enthält.

Analog beschreibt WO 2008/137367 Mehrschichtsysteme bei denen sich die Teilschichten aus Polyvinylbutyral in ihrem Polyvinylalkoholgehalt unterscheiden.

WO2011/078314A1 betrifft ein Folienlaminat aus einer Teilschicht (A), enthaltend Polyvinylacetale aus Aldehyden mit 4-6 Kohlenstoffatomen und einer Teilschicht (B), enthaltend Co- oder Mischacetale aus Aldehyden mit 4-6 Kohlenstoffatomen und Aldehyden mit 1-3 Kohlenstoffatomen.

Durch die unterschiedlichen Restacetatgehalte bzw. unterschiedlichen Anteile an Polyvinylalkoholgruppen weisen die Teilschichten einen unterschiedlichen Weichmachergehalt und damit unterschiedliche mechanische Festigkeiten auf.

Die bekannten Mehrschichtfolien basieren auf Polyvinylbutyral, das durch Umsetzung von Polyvinylalkohol mit n-Butyraldehyd erhältlich ist. Bei Verwendung von Polyvinylbutyralen mit unterschiedlichen Polyvinylalkohol- oder Polyvinylacetatgehalten ergeben sich unterschiedliche Weichmachergehalte der Schichten, die sich durch Migration zum Teil angleichen können.

Die Migration von Weichmacher kann auch zu Unverträglichkeiten mit der polymeren Matrix und damit zum Ausschwitzen von Weichmacher führen. Die mechanischen Eigenschaften wie Zug- oder Reissfestigkeit der Folie hängen ebenfalls stark vom Weichmachergehalt ab. In der Regel verschlechtern sich die mechanischen Eigenschaften der Folie bei Zunahme des Weichmachergehalts bzw. mit abnehmender Anzahl an Polyvinylalkoholgruppen des verwendeten Polyvinylbutyrals.

Aufgabe der vorliegenden Erfindung war es daher, Mehrschichtfolien z.B. für Verbundverglasungen mit verbesserten mechanischen Eigenschaften herzustellen, die durch die Auswahl der eingesetzten Polyvinylacetale eine hohe Weichmacherverträglichkeit aufweisen.

Es wurde überraschend gefunden, dass Folienlaminate enthaltend Polyvinylacetale, die aus mindestens drei Teilschichten aufgebaut sind, von denen zumindest eine Teilschicht Polyvinyl(iso)acetal enthält, gegenüber Folienlaminate die nur Teilschichten basierend auf Polyvinyl(n)acetal enthalten, eine deutlich verbesserte Weichmacherverträglichkeit aufweisen.

Mischungen von Polyvinyl(iso)acetal mit Dibutylphatalat als Weichmacher sind durch J. Fitzhugh und R Croizer J. Polym. Sci (1951) Vol VIII, S. 225-241 beschrieben. Diese Publikation betrifft nicht die Herstellung von Folien und deren Verwendung.

Weichmacherhaltige Polyvinyl(iso)acetale sind weiterhin aus US 2008/0286542 zur Herstellung von Zwischenschichtfilmen für dekorative Glaselemente bekannt. Die hier beschriebenen Polyvinyl(iso)acetale weisen für Verbundsicherheitsverglasungen einen zu niedrigen Acetalisierungsgrad von 8-30 Gew.% und damit eine ungenügende Weichmacheraufnahme auf. Dementsprechend offenbart US 2008/0286542 nur Mehrschichtfolien, bei denen weichmacherhaltiges Polyvinyl(iso)acetal mit niedrigem Acetalisierungsgrad zwischen zwei Schichten von weichmacherhaltigem Polyvinyl(n)acetal einlaminiert ist.

Folienlaminate ohne Verwendung von Polyvinyl(iso)acetal sind z.B. aus WO 2006/102049 A1, WO 2011/078314 A1, WO 2011/081190 A1, WO 2011/024788 A1 US 2007014976 und JP 2011042552 bekannt. Die vorteilhaften Eigenschaften von Polyvinyl(iso)acetal sind hier nicht beschrieben.

Gegenstand der vorliegenden Erfindung ist daher ein Folienlaminat, aufgebaut aus mindestens drei Schichten A, B und C, jeweils enthaltend mindestens einen Weichmacher und mindestens ein Polyvinylacetal wobei mindestens eine der Schichten A, B oder C als Polyvinylacetal mindestens ein Polyvinyl(iso)acetal mit einem mittleren Polymerisationsgrad von kleiner 3000, einem Anteil an Polyvinylalkoholgruppen von 10 - 25 Gew.% und einem Anteil an Polyvinyl(iso)acetalgruppen von 50 - 80 Gew.% enthält und die Schicht B einen Weichmacheranteil von weniger als 32 Gew% aufweist mit den Abfolgen und Zusammensetzung der Schichten gemäß der ersten oder zweiten Ausführungsform.

Bevorzugt ist Schicht B zwischen die Schichten A und C angeordnet. Schicht B kann insbesondere einen Weichmacheranteil von 30 bis 15 Gew%, besonders bevorzugt von 25 bis 15 Gew%% und insbesondere von 20 bis 15 Gew% aufweisen.

Die Schichten A und C können einen gleichen oder unterschiedlichen Weichmacheranteil von 60 bis 15 Gew% besonders bevorzugt von 50 bis 25 Gew% und insbesondere von 303 bis 18 Gew% aufweisen.

Bevorzugt enthalten die Schichten Polyvinyl(iso)acetale bzw. Polyvinyl(n)acetale mit einem Anteil an Polyvinylacetatgruppen bezogen auf die Schichten jeweils gleich oder unterschiedlich 0.1 bis 15 Gew.%, bevorzugt 0,1 bis 8 Gew.% und insbesondere 0,1 bis 3 Gew.% betragen. Ganz besonders bevorzugt ist ein Anteil an Polyvinylacetatgruppen von 0,1 bis 2 Gew.%.

Der Polyvinylalkoholgehalt der verwendeten Polyvinyl(iso)acetale und Polyvinyl(n)acetale kann in den Schichten gleich oder unterschiedlich sein und 10 - 25 Gew.%, bevorzugt 18 - 23 Gew.% betragen.

Die in den Schichten A, B und C eingesetzten Polyvinylacetale (Polyvinyl(iso)acetal oder Polyvinyl(n)acetal) können einen gleichen oder unterschiedlichen mittleren Polymerisationsgrad auf weisen, der zwischen 200 und 2800 liegt. Bevorzugt weisen die in den Schichten A, B und C eingesetzten Polyvinylacetale (Polyvinyl(iso)acetal oder Polyvinyl(n)acetal) einen mittleren Polymerisationsgrad zwischen und 900 und 2500 auf.

Folienlaminate mit drei Schichten haben sich in der Praxis als gut herstellbar erweisen. Die erfindungsgemäßen Folienlaminate können auch aus mehr als drei Schichten (z.B. 4, 5, 6 oder 7) bestehen, wobei die Schichten die genannten oder im Folgenden aufgeführten Eigenschaften oder Zusammensetzungen aufweisen. Die Ausführungsformen mit den Schichtfolgen A, B und C sind beispielhaft zu verstehen. Die vorliegende Erfindung umfasst auch z.B. Ausführungsformen mit den Schichtfolgen A, B, C, A oder A, B, C, A, B oder A, B, C, A, B, C mit den beschriebenen Zusammensetzungen der Schichten A, B und C.

In einer ersten Ausführungsform der Erfindung weisen die Folienlaminate die folgende Abfolge und Zusammensetzung der Schichten A, B und C auf:
- A enthaltend mindestens einen ersten Weichmacher und ein erstes Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- B enthaltend mindestens einen zweiten Weichmacher und ein Polyvinyl(n)acetal mit einem Anteil an Polyvinylalkoholgruppen von 10 - 25 Gew.% und
- Teilfolie C, enthaltend mindestens einen dritten Weichmacher und ein zweites Polyvinyl(iso)acetal mit einem Anteil an Polyvinyl(iso)acetalgruppen von 50 - 80 Gew.% und einem Anteil an Polyvinylalkoholgruppen von 10 - 25 Gew.%.

In einer zweiten Ausführungsform der Erfindung weisen die Folienlaminate die folgende Abfolge und Zusammensetzung der Schichten A, B und C auf:
- A, enthaltend mindestens einen ersten Weichmacher und ein erstes Polyvinyl(n)acetal mit einem Anteil an Polyvinylalkoholgruppen von 10 - 25 Gew.% und
- B, enthaltend mindestens einen zweiten Weichmacher und Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- C, enthaltend mindestens einen dritten Weichmacher und ein zweites Polyvinyl(n)acetal mit einem Anteil an Polyvinylalkoholgruppen von 10 - 25 Gew.%.

Die erfindungsgemäß eingesetzten Schichten enthalten Polyvinylacetale, die durch Acetalisierung von Polyvinylalkoholen mit jeweils "n"- (d.h. linearen Verbindungen) oder "iso"-Aldehyden bzw -Ketoverbindungen (d.h. verzweigten Verbindungen) erhalten werden.

Bevorzugt resultieren die erfindungsgemäß verwendeten Polyvinyl(iso)acetale aus der Umsetzung von mindestens einem Polvinylalkohol mit einer oder mehreren aliphatischen Ketoverbindung mit 4 bis 10 Kohlenstoffatomen mit mindestens einer Verzweigung an der alpha- oder beta-Position zur Ketogruppe. Die zur Herstellung der Polyvinyl(iso)acetale eingesetzten aliphatischen Ketoverbindungeb können in verschiedenen Schichten gleich oder unterschiedlich sein. Bevorzugt sind die aliphatischen Ketoverbindungen zur Herstellung der Polyvinyl(iso)acetale in verschiedenen Schichten identisch; besonders bevorzugt sind die Polyvinyl(iso)acetale in verschiedenen Schichten chemisch identisch dh weisen gleiche Anteile an Polyvinyalkohol- und Polyvinylacetatgruppen sowei Polymerisationsgrad auf. Insbesondere wird zur Herstellung der Polyvinyl(iso)acetale iso-Butyraldehyd verwendet.

Es ist bei der Herstellung der erfindungsgemäß verwendeten Polyvinyl(iso)acetale auch möglich, neben den beschriebenen verzweigeten Ketoverbindungen zusätzlich ein oder mehrere unverzweigte aliphatische Ketoverbindungen mit 2 - 10 Kohlenstoffatomen zur Acetalisierung einzusetzen. Bevorzugt wird ein Gemisch aus n-Butyraldehyd und/oder Acetaldehyd mit iso-Butyraldehyd verwendet. Der Anteil an Acetalgruppen im Polyvinyl(iso)acetal, die aus verzweigten Ketoverbindungen resultieren, sollte über 50 Mol%, bevorzugt über 80 Mol% der Summe aus verzweigten und unverzweigten Acetalgruppen liegen.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Es ist bei der Herstellung der erfindungsgemäß verwendeten Polyvinyl(n)acetale auch möglich, neben den beschriebenen unverzweigeten Ketoverbindungen zusätzlich ein oder mehrere verzweigte aliphatische Ketoverbindungen mit 4 - 10 Kohlenstoffatomen zur Acetalisierung einzusetzen. Bevorzugt wird ein Gemisch aus n-Butyraldehyd und/oder Acetaldehyd mit iso-Butyraldehyd verwendet. Der Anteil an Acetalgruppen im Polyvinyl(n)acetal, die aus unverzweigten Ketoverbindungen resultieren, sollte über 50 Mol%, bevorzugt über 80 Mol% der Summe aus verzweigten und unverzweigten Acetalgruppen liegen.

Die zur Herstellung der Polyvinylacetale (Polyvinyl(iso)- und Polyvinyl(n)acetale) in verschiedenen Schichten verwendeten Polyvinylalkohole können jeweils gleich oder unterschiedlich, rein oder eine Mischung von Polyvinylalkoholen mit unterschiedlichem Polymerisationsgrad oder Hydrolysegrad sein.

Der Polyvinylacetatgehalt der Polyvinylacetale (Polyvinyl(iso)- und Polyvinyl(n)acetale) in verschiedenen Schichten kann durch

Verwendung eines zu einem entsprechenden Anteil hydrolisierten Polyvinylalkohols eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Teilfolie ändern. Es ist auch möglich, die Acetalisierung der Polyvinylalkohole mit einem Gemisch aus mehreren Aldehyden oder Ketoverbindungen durchzuführen.

Bevorzugt weisen die zwischen die Schichten A und C angeordnete Schicht B ein Polyvinylacetal (Polyvinyl(iso)acetal oder Polyvinyl(n)acetal) mit einem Anteil an Polyvinylalkoholgruppen auf der gleich oder größer ist als der Anteil an Polyvinylalkoholgruppen des Polyvinylacetals in den Schichten A und C. Insbesondere ist der Anteil an Polyvinylalkoholgruppen im Polyvinylacetal der Schicht B um 0.1 bis 10 Gew%, bevorzugt um 0.1 bis 5 Gew% und insbesondere um 0.1 bis 2 Gew% größer als der Anteil an Polyvinylalkoholgruppen der Polyvinylacetale der Schichten A und C.

Die Schichten enthalten bevorzugt unvernetztes Polyvinyl(iso)acetal bzw. Polyvinyl(n)acetal. Der Einsatz von vernetzten Polyvinyl(iso)acetalen und/oder vernetztem Polyvinyl(n)acetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Allgemein sinkt die Verträglichkeit von Weichmacher und Polyvinylacetalen mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalisierungsgrades, d.h. mit Abnahme der Anzahl an Hydroxygruppen und damit der Polarität des Polyvinylacetals.

Auf Grund der unterschiedlichen Polyvinylacetal-Gruppen (n und iso) der Schichten können diese bei gleicher Anzahl an Polyvinylalkoholgruppen unterschiedliche Mengen von Weichmachern aufnehmen, ohne dass es zum Ausschwitzen oder Migrieren des Weichmachers kommt. Unterschiedliche Mengen von Weichmacher haben auch unterschiedliche mechanische Eigenschaften der Schichten zur Folge, sodass die mechanischen Eigenschaften der Schichten und damit des Folienlaminats über die Auswahl der Weichmacher und/oder des Polyvinylalkoholgehalts der eingesetzten Polyvinylacetale eingestellt werden können

Bevorzugt weisen jeweils aneinander grenzende Schichten der Folienlaminate Polyvinylacetale auf, deren Anteile an Polyvinylalkoholgruppen sich um höchstens 2 Gew.% unterscheiden. Besonders bevorzugt weisen jeweils aneinander grenzende Schichten Polyvinylacetale mit gleichem Anteil an Polyvinylalkoholgruppen auf. Diese Varianten betreffen insbesondere die Ausführungsformen der Erfindung, die aneinander grenzende Schichten enthaltend jeweils Polyvinyl(iso)acetale und Polyvinyl(n)acetale aufweisen.

Die Schichten können jeweils gleiche oder unterschiedliche Weichmacher (erste, zweite oder dritte) enthalten. Bevorzugt ist der Einsatz von chemisch gleichen Weichmachern in allen Schichten. Jeweils aneinander grenzende Schichten der Folienlaminate können Weichmachergehalte aufweisen, die sich um höchstens 10 phr, bevorzugt um höchstens 5 phr und insbesondere um höchstens 2 phr (phr = Gewichtsteile Weichmacher auf 100 Gewichtsteile Polyvinylacetal) unterscheiden.

Es ist weiterhin bevorzugt das die Schicht B einen höheren Weichmacheranteil als die Schichten A und C aufweist.

Die Schichten können Weichmacher oder Weichmachermischungen aus mindestens einem der folgenden, für PVB-Folie bekannten Weichmacher enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat, Estern der Cyclohexandicarbonsäure wie etwa 1,2-Cyclohexandicarbonsäurediisononylester
- Ester oder Ether von mehrwertigen aliphatischen oder aromatischen Alkoholen oder Oligoetherglykolen mit einem oder mehreren unverzweigten oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können dienen Diethylenglykol-bis-(2-ethylhexanoat), Triethylenglykol-bis-(2-ethyl-hexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Besonders bevorzugt wird ein oder mehrere der folgenden Weichmacher verwendet: Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat

Zusätzlich können die Schichten weitere Zusätze enthalten wie Restmengen an Wasser, UV-Absorber, Antioxidantien, Haftungsregulatoren, optische Aufheller, Stabilisatoren, Farbmittel, Verarbeitungshilfs-mittel, organische oder anorganische Nanopartikel, pyrogene Kieselsäure und/oder oberflächenaktive Stoffe.

In einer Variante der Erfindung weisen alle Schichten die genannten Additive in weitgehend der gleichen Konzentration auf. In einer besonderen Variante der Erfindung weist zumindest eine der Schichten keine Haftungsregulatoren (Antihaftmittel) auf. Als Antihaftmittel werden im Rahmen der vorliegenden Erfindung Verbindungen verstanden, mit der die Haftung von weichmacherhaltigen Polyvinylacetalfolien an Glasoberflächen eingestellt werden kann. Verbindungen dieser Art sind dem Fachmann bekannt; in der Praxis werden hierzu häufig Alkali- oder Erdalkalimetallsalze von organischen Säuren, wie z.B. Kalium/Magnesiumacetat eingesetzt.

Es ist ebenso möglich, dass mindestens eine der Schichten zur Verbesserung der Steifigkeit 0,001 bis 20 Gew.% SiO₂, bevorzugt 1 bis 15 Gew.%, insbesondere 5 bis 10 Gew.%, ggf. gedopt mit Al₂O₃ oder ZrO₂ enthält.

Erfindungsgemäße Folienlaminate weisen bevorzugt die industriell üblichen Gesamtdicken von z.B. 0,38, 0,76, 1,14 mm (d.h. Vielfache von 0,38 mm) auf.

Zur Herstellung der erfindungsgemäßen Folienlaminate können die Schichten zunächst einzeln durch Extrusion hergestellt und anschließend mechanisch z.B. durch gemeinsames Aufrollen auf einen Folienwickel zur erfindungsgemäßen Zwischenschichtfolie zusammengefügt werden. Es ist auch möglich, die Folienlaminate durch gleichzeitige Coextrusion der Schichten herzustellen. Die Coextrusion kann z.B. mit einer entsprechend ausgestatteten Mehrschichtdüse oder einem Feed-Block erfolgen.

Im Automobilbereich werden häufig Folien verwendet, die im oberen Bereich ein sog. Farbband aufweisen. Hierzu kann entweder der obere Teil der Folie mit einer entsprechend eingefärbten Polymerschmelze coextrudiert werden oder es kann in einem Mehrschichtsystem eine der Schichten eine unterschiedliche Färbung aufweisen. In der vorliegenden Erfindung ist dies durch ganz oder teilweises Einfärben zumindest einer Schicht realisierbar.

Die Herstellung der erfindungsgemäßen Folienlaminate bzw. Schichten folgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit liefern.

Alternativ kann einem bereits hergestellten erfindungsgemäßen Folienlaminat durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Verbundglasherstellung auf und werden bevorzugt im Automobilbereich eingesetzt. Erfindungsgemäße Folienlaminate weisen unabhängig vom Herstellverfahren eine einseitig oder besonders bevorzugt beidseitig aufgebrachte Oberflächenstruktur mit einer Rauhigkeit R_{z} von 15 bis 150 µm, bevorzugt R_{z} von 15 bis 100 µm, besonders bevorzugt R_{z} von 20 bis 80 µm und insbesondere R_{z} von 40 bis 75 µm auf.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

Erfindungsgemäße Folienlaminate sind zur Herstellung von Glas/Folienlaminat/Glas, Glas/Folienlaminat/Kunststoff- oder Kunststoff/Folienlaminat/Kunststoff-Verbünden gut geeignet. Als Kunststoffscheiben werden insbesondere solche aus Polycarbonat, PET oder PMMA eingesetzt.

Besonders geeignet sind die Folienlaminate zur Herstellung von Glas/Folienlaminat/Glas, Glas/Folienlaminat/Kunststoff- oder Kunststoff/Folienlaminat/Kunststoff-Verbünden für Kraftfahrzeuge, Flugzeuge, Schiffe, Architekturverglasungen, Fassadenbauteilen oder zur Herstellung von Photovoltaikmodulen. Die erfindungsgemäßen Folien können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich, z.B. als Windschutzscheibe, als auch im Architekturbereich z.B. in Fenstern oder transparenten Fassadenbauteilen oder im Möbelbau verwendet werden.

Für Windschutzscheiben mit HUD Funktionalität ist es vorteilhaft, mindestens einer der Schichten A, B oder C mit einem keilförmigen Querschnitt zu versehen. Insbesondere können die Schicht B einen keilförmigen, die Schichten A und C einen gleichförmigen (planparallelen) Querschnitt aufweisen.

### Messmethoden

Die Bestimmung des Polyvinylalkohol- und Polyvinylacetatgehaltes von PVB erfolgt gemäß ASTM D 1396-92. Der Acetalysierungsgrad (= Butyralgehalt) kann als der zu Hundert fehlende Teil aus der gemäß ASTM D 1396-92 bestimmten Summe aus Polyvinylalkohol- und Polyvinylacetatgehalt berechnet werden. Die Umrechnung von Gew.% in Mol.% erfolgt gemäß dem Fachmann bekannten Formeln.

Die Bestimmung des mittleren Polymersiationsgrades erfolgt gemäß JIS K 6726 und wird aus dem Viskositätsmittel des zur Herstellung des Polyvinylacetals verwendeten Polyvinylalkohls bestimmt.

Der Weichmachergehalt der Folien wird durch Lösen der Folie in Ethanol und anschließende quantitative Gaschromatographie ermittelt. Um den Weichmachergehalt der Schichten zu ermitteln müssen die Mehrschichtfolien nach einer Konditionierungszeit von ca. 1 Woche d.h. nach weitgehendem Abschluss der Weichmachermigration wieder getrennt und einzeln vermessen werden.

### Messung der Zugeigenschaften der Folien

Die Werte für die Reißfestigkeiten und Reißdehnungen der Folie wurden mittels Zugprüfmaschine (Fa.TIRA) gemäß ISO 527 bei einer Geschwindigkeit von 200 mm/min bestimmt.

### Bestimmung des Kugelfalls nach ECE43

Die Bestimmung der Werte für den Kugelfall erfolgte nach ECE43 mit einer 2,26 Kg schweren Stahlkugel an Glasscheiben der Dimension 30x30 cm und einer Dicke von 2 mm, welche die in genannten Beispielen gezeigten Folien enthielten. Die Prüfung erfolgt an 10 Glasmustern bei einer Temperatur und Luftfeuchtigkeit gemäß ECE43.

### Pummeltest

Zur Prüfung der Haftung von Folien auf der Basis von weichmacherhaltigem teilacetalisiertem Polyvinylalkohol und zur Überprüfung der Wirkung von Antihaftmitteln wird ein sogenannter Pummeltest angewendet, der in der Literatur in gewissen Varianten beschrieben wird. Im Rahmen der vorliegenden Erfindung angegebene Pummelwerte wurden mit dem in der WO 03/033583 A1 beschriebenen Pummeltest bestimmt.

### Kompressionsschertest

Zur Beurteilung der Haftung einer PVB-Folie am Mineralglas wird ein sogenannter Kompressionsschertest gemäß nachfolgender Beschreibung durchgeführt. Zur Herstellung der Prüfkörper wird die zu prüfende PVB-Klebefolie zwischen zwei ebene Silikatglasscheiben des Formats 300 mm x 300 mm mit einer Dicke von 4 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von 30 min. zu einem ebenen Verbundsicherheitsglas verpresst. Aus dem so hergestellten Verbundsicherheitsglas werden 10 Proben mit den Maßen 25,4 mm x 25,4 mm geschnitten. Diese werden unter einem Winkel von 45° in eine zweiteilige Prüfapparatur eingespannt. Die obere Hälfte wird mit einer stetig steigenden, genau vertikal nach unten gerichteten Kraft beaufschlagt, bis es zu einer Abscherung innerhalb des Prüfkörpers, d.h. der zu prüfenden Verbundsicherheitsglasscheiben, kommt.

Die Prüfparameter sind wie folgt:

| | |
|---|---|
| Prüfkörper: | quadratisch 25,4 mm x 25,4 mm |
| Verlegung: | untere Scheibe jeweils mit der Luft- bzw. Feuerseite zur Folie (Luft/Luft), oder obere und untere Scheibe jeweils mit der Zinnseite zur Folie (Bad/Bad) |
| Lagerung vor dem Versuch: | 4h bei Normklima 23°C/50% RLF |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm2 oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint.

### Beispiele:

Allgemeine Synthesevorschrift für Polyvinyl(n)acetal 100 Gewichtsteile des Polyvinylalkohols Mowiol 28-99 (Handelsprodukt von Kuraray Europe GmbH) wurden in 975 Gewichtsteilen Wasser unter Erwärmen auf 90 °C gelöst. Es wurden bei einer Temperatur von 40 °C 57,5 Gewichtsteile n-Butyraldehyd und bei einer Temperatur von 12 °C unter Rühren 75 Gewichtsteile 20 %ige Salzsäure zugegeben. Die Mischung wurde nach Ausfallen des Polyvinylbutyrals (PVB) auf 73°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein Polyvinyl(n)acetal mit einem Polyvinylalkoholgehalt von 20,3 Gew.% und einem Polyvinylacetatgehalt von 0,9 Gew.% erhalten.

Allgemeine Synthesevorschrift für Polyvinyl(iso)acetal 100 Gewichtsteile des Polyvinylalkohols Mowiol 28-99 (Handelsprodukt von Kuraray Europe GmbH) wurden in 975 Gewichtsteilen Wasser unter Erwärmen auf 90 °C gelöst. Es wurden bei einer Temperatur von 40 °C 57,6 Gewichtsteile iso-Butyraldehyd und bei einer Temperatur von 12 °C unter Rühren 75 Gewichtsteile 20 %ige Salzsäure zugegeben. Die Mischung wurde nach Ausfallen des Polyvinylbutyrals (PVB) auf 73°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein Polyvinyl(iso)acetal mit einem Polyvinylalkoholgehalt von 20,3 Gew.% und einem Polyvinylacetatgehalt von 1,2 Gew.% erhalten.

Bei Verwendung von 55,6 Gewichtsteilen iso-Butyraldehyd unter ansonsten gleichen Bedingungen wurde ein Polyvinyl(iso)acetal mit einem Polyvinylalkoholgehalt von 22,3 Gew.% und einem Polyvinylacetatgehalt von 1,2 Gew.% erhalten.

### Herstellung von Folien

Es wurden Folien aus Teilschichten der Zusammensetzung gemäß Tabelle 1 und 2 durch Zusammenlegen hergestellt. Als Weichmacher wurde Triethylenglycol-2-ethylhexanoat (3G8) verwendet. Der Weichmacheranteil war bei Zusammenlegen der Schichten gleich.

Beispiel 1 zeigt erfindungsgemäße Folien mit einem Aufbau Polyvinyl(iso)butyral/Polyvinyl(n)butyral/Polyvinyl(iso)butyral mit jeweils gleichem Polyvinylalkohol- und Polyvinylacetatgehalt. Vergleichsbeispiel 2 zeigt eine nicht erfindungsgemäße Folie mit einem Aufbau Polyvinyl(n)butyral/Polyvinyl(n)butyral/Polyvinyl(n)butyral mit jeweils gleichem Polyvinylalkohol- und Polyvinylacetatgehalt.

Tabelle 3 zeigt physikalische Daten der Folien. Es zeigt sich, dass obwohl die Hafteigenschaften der Folien an Glas auf ähnlichem Niveau waren, eine erheblich verbesserte Penetrationsfestigkeit der erfindungsgemäßen Folien erhalten wird.

Die. Penetrationsfestigkeiten von Verbundsicherheitsglas hängen neben den bereits erwähnten Glas- und Foliendicken ebenfalls von der Glashaftung der verwendeten Folien ab. Es ist allgemein bekannt, dass Folien mit einer höheren Glashaftung (Pummel 8-10) schlechtere Kugelfallergebnisse liefern als Folien mit einer niedrigeren (Pummel 1-3) Glashaftung bei sonst identischem Aufbau, d.h. gleicher verwendeter Glas- und Foliendicke.

Um den Einfluss der Folienmechanik auf die Penetrationseigenschaften mittels Kugelfallprüfung zu bewerten, sollten vergleichende Beispiele ein ähnliches Haftungsniveau aufweisen, d.h sich nicht um mehr als eine Einheit im Pummelwert unterscheiden.

Beispiel 1 zeigt, dass bei Verwendung von erfindungsgemäßen Folien mit Iso-PVB in der Außenschicht eine deutlich bessere Penetrationsfestigkeit erreicht wird als im Beispiel 2, welches ein Vergleichsbeispiel darstellt, enthaltend nur Folien auf Basis Polyvinyl(n)butyral.

In den erfindungsgemäßen Beispielen 3 und 4 sind darüber hinaus die Gesamtfoliendicken geringer als in Beispiel 2, was eigentlich eine schlechtere Penetrationsfestigkeit erwarten lassen würde. Es zeigt sich jedoch überraschend, dass trotz geringerer Foliendicke eine deutlich bessere Penetrationsfestigkeit erhalten werden kann.

Es bedeuten in den Tabellen:
- PVA Iso-PVB A:: PVA-Gehalt des Iso-PVB Teilschicht A [Gew.%]
- PVA Iso-PVB C: PVA-Gehalt des Iso-PVB Teilschicht C [Gew.%]
- PVA n-PVB B: PVA-Gehalt des n-PVB Teilschicht B [Gew.%]
- PVA n-PVB A: PVA-Gehalt des n-PVB Teilschicht A [Gew.%]
- PVA Iso-PVB B: PVA-Gehalt des Iso-PVB Teilschicht B [Gew.%]
- PVA n-PVB C: PVA-Gehalt des n-PVB Teilschicht C [Gew.%]
- Dicke Iso-PVB: Schichtdicke Teilschicht Iso-PVB [mm]
- Dicke n-PVB: Schichtdicke Teilschicht n-PVB [mm]
- Haftung F/Sn CSS: Kompressionsschertest [N/mm2]
- Kugelfall: Kugelfall nach ECE43 2mm Glas, 30x30 cm, 2,26 Kg Kugel [Fallhöhe, m]
- Mowiol 28-99: Handelsprodukt von Kuraray Europe GmbH mit einem Polymerisationsgrad von 1700.

**Tabelle 1**

| Bsp | PVA Iso-PVB A | PVA Iso-PVB C | PVA n-PVB B | Dicke Iso-PVB | Dicke n-PVB | Gesamt dicke | WM-Gehalt Teilschicht Iso-PVB [Gew.%] | WM-Gehalt Teilschicht n-PVB [Gew.%] |
|---|---|---|---|---|---|---|---|---|
| 1 | 20.3 | 20.3 | 20.3 | 0,3 | 0,2 | 0,8 | 27,5 | 27,5 |
| 2 | - | - | 20.3 | - | 0,8 | 0,8 | 27,5 | 27,5 |
| 2a | 21.5 | 21.5 | 20.8 | 0.3 | 0.2 | 0.8 | 27,5 | 27,5 |

**Tabelle 2**

| Bsp | PVA n-PVB A | PVA Iso-PVB B | PVA n-PVB C | Dicke Iso-PVB | Dicke n-PVB | Gesamtdicke | WM-Gehalt Teilschicht Iso-PVB [Gew.%] | WM-Gehalt Teilschicht n-PVB [Gew.%] |
|---|---|---|---|---|---|---|---|---|
| 3 | 20.3 | 20.3 | 20.3 | 0,3 | 0,2 | 0,7 | 27,5 | 27,5 |
| 4 | 20.3 | 22.3 | 20.3 | 0.3 | 0,2 | 0,7 | 27,5 | 27,5 |

**Tabelle 3**

| Bsp | Haftung F/Sn CSS | Pummel F | Pummel Sn | Kugelfal 1 | Reissfestigkeit [N/mm2] | Reissdehnung [%] | WM-Gehalt Teilschicht Iso-PVB nach Laminierung [Gew.%] | WM-Gehalt Teilschicht n-PVB nach Laminierung [Gew.%] |
|---|---|---|---|---|---|---|---|---|
| 1 | 14,6 | 4 | 4 | 11,0 | 29 | 254 | 28.3 | 25 |
| 2 | 14,5 | 5 | 3 | 5,0 | 30 | 270 | - | 27.5 |
| 2a | 16,4 | 4 | 2 | 6 | 28,9 | 259 | 28 | 26 |
| 3 | 13,6 | 5 | 3 | 7,0 | 28,8 | 272 | 28,6 | 26,5 |
| 4 | 15,9 | 6 | 4 | 7,75 | 29,9 | 270 | 27.6 | 27,4 |

## Patentansprüche

1. Folienlaminat aufgebaut aus mindestens drei Schichten A, B und C, jeweils enthaltend mindestens einen Weichmacher und mindestens ein Polyvinylacetal **dadurch gekennzeichnet das** mindestens eine der Schichten A, B oder C als Polyvinylacetal mindestens ein Polyvinyl(iso)acetal mit einem mittleren Polymerisationsgrad von kleiner 3000, einem Anteil an Polyvinylalkoholgruppen von 10 - 25 Gew.% und einem Anteil an Polyvinyl(iso)acetalgruppen von 50 - 80 Gew.% enthält und die zwischen die Schichten A und C , angeordnete Schicht B einen Weichmacheranteil von weniger als 32 Gew% aufweist und die folgende Abfolge und Zusammensetzung der Schichten A, B und C
- A enthaltend mindestens einen ersten Weichmacher und ein erstes Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- B enthaltend mindestens einen zweiten Weichmacher und ein Polyvinyl(n)acetal mit einem Anteil an Polyvinylalkoholgruppen von 10 - 25 Gew.% und
- Teilfolie C, enthaltend mindestens einen dritten Weichmacher und ein zweites Polyvinyl(iso)acetal mit einem Anteil an Polyvinyl(iso)acetalgruppen von 50 - 80 Gew.% und einem Anteil an Polyvinylalkoholgruppen von 10 - 25 Gew.%.

2. Folienlaminat aufgebaut aus mindestens drei Schichten A, B und C, jeweils enthaltend mindestens einen Weichmacher und mindestens ein Polyvinylacetal **dadurch gekennzeichnet** das mindestens eine der Schichten A, B oder C als Polyvinylacetal mindestens ein Polyvinyl(iso)acetal mit einem mittleren Polymerisationsgrad von kleiner 3000, einem Anteil an Polyvinylalkoholgruppen von 10 - 25 Gew.% und einem Anteil an Polyvinyl(iso)acetalgruppen von 50 - 80 Gew.% enthält und die zwischen die Schichten A und C , angeordnete Schicht B einen Weichmacheranteil von weniger als 32 Gew% aufweist und die folgende Abfolge und Zusammensetzung der Schichten A, B und C
- A, enthaltend mindestens einen ersten Weichmacher und ein erstes Polyvinyl(n)acetal mit einem Anteil an Polyvinylalkoholgruppen von 10 - 25 Gew.% und
- B, enthaltend mindestens einen zweiten Weichmacher und Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- C, enthaltend mindestens einen dritten Weichmacher und ein zweites Polyvinyl(n)acetal mit einem Anteil an Polyvinylalkoholgruppen von 10 - 25 Gew.%.

3. Folienlaminat nach Anspruch 1 oder 2, **dadurch gekennzeichnet** das die Schicht B ein Polyvinylacetal mit einem Anteil an Polyvinylalkoholgruppen aufweist, der gleich oder größer ist als der Anteil an Polyvinylalkoholgruppen des Polyvinylacetals in den Schichten A und C.

4. Folienlaminat nach einem der Ansprüche 1 bis 3, **dadurch gekennzeichnet das** jeweils aneinander grenzende Schichten Weichmachergehalte aufweisen, die sich um höchstens 10 phr unterscheiden.

5. Folienlaminat nach einem der Ansprüche 1 bis 4, **dadurch gekennzeichnet das** jeweils aneinander grenzende Schichten Polyvinylacetale aufweisen, deren Anteile an Polyvinylalkoholgruppen sich um höchstens 2 Gew.% unterscheiden.

6. Folienlaminat nach einem der Ansprüche 1 bis 5, **dadurch gekennzeichnet das** das Polyvinyl(iso)acetale aus der Umsetzung von mindestens einem Polvinylalkohol mit einer oder mehreren aliphatischen Ketoverbindung mit 4 bis 10 Kohlenstoffatomen mit mindestens einer Verzweigung an der alpha- oder beta-Position zur Ketogruppe resultieren.

7. Folienlaminat nach einem der Ansprüche 1 bis 6, **dadurch gekennzeichnet das** die Polyvinyl(n)acetale aus der Umsetzung von mindestens einem Polvinylalkohol mit einer oder mehreren aliphatischen, unverzweigten Ketoverbindung mit 2 bis 10 Kohlenstoffatomen resultieren.

8. Folienlaminat nach einem der Ansprüche 1 bis 7, **dadurch gekennzeichnet, dass** das Folienlaminat durch Coextrusion der Schichten hergestellt wird.

9. Folienlaminat nach einem der Ansprüche 1 bis 8, **dadurch gekennzeichnet, dass** das Folienlaminat durch Zusammenlegen der Schichten hergestellt wird.

10. Verwendung der Folienlaminate nach einem der Ansprüche 1 bis 9 zur Herstellung von Glas/Folienlaminat/Glas-Verbünden für Kraftfahrzeuge, Flugzeuge, Schiffe, Architekturverglasungen, Fassadenbauteilen oder zur Herstellung von Photovoltaikmodulen.

## Claims

1. A film laminate, formed from at least three layers A, B and C, each containing at least one plasticiser and at least one polyvinyl acetal, **characterised in that** at least one of the layers A, B or C contains, as polyvinyl acetal, at least one polyvinyl (iso)acetal having a mean degree of polymerisation of less than 3,000, a proportion of polyvinyl alcohol groups of 10 - 25 % by weight, and a proportion of polyvinyl (iso)acetal groups of 50 - 80 % by weight, and the layer B arranged between the layers A and C has a plasticiser content of less than 32 % by weight and the following sequence and composition of the layers A, B and C
- A, containing at least one first plasticiser and one first polyvinyl (iso)acetal having a proportion of polyvinyl (iso)acetal groups of 50 - 80 % by weight and a proportion of polyvinyl alcohol groups of 10 - 25 % by weight, and
- B, containing at least one second plasticiser and a polyvinyl (n)acetal having a proportion of polyvinyl alcohol groups of 10 - 25 % by weight, and
- sub-film C, containing at least one third plasticiser and a second polyvinyl (iso)acetal having a proportion of polyvinyl (iso)acetal groups of 50 - 80 % by weight and a proportion of polyvinyl alcohol groups of 10 - 25 % by weight.

2. The film laminate, formed from at least three layers A, B and C, each containing at least one plasticiser and at least one polyvinyl acetal, **characterised in that** at least one of the layers A, B or C contains, as polyvinyl acetal, at least one polyvinyl (iso)acetal having a mean degree of polymerisation of less than 3,000, a proportion of polyvinyl alcohol groups of 10 - 25 % by weight, and a proportion of polyvinyl (iso)acetal groups of 50 - 80 % by weight, and the layer B arranged between the layers A and C has a plasticiser content of less than 32 % by weight and the following sequence and composition of the layers A, B and C
- A, containing at least one first plasticiser and one first polyvinyl (n)acetal having a proportion of polyvinyl alcohol groups of 10 - 25 % by weight, and
- B, containing at least one second plasticiser and polyvinyl (iso)acetal having a proportion of polyvinyl (iso)acetal groups of 50 - 80 % by weight and a proportion of polyvinyl alcohol groups of 10 - 25 % by weight, and
- C, containing at least one third plasticiser and a second polyvinyl (n)acetal having a proportion of polyvinyl alcohol groups of 10 - 25 % by weight.

3. The film laminate according to claim 1 or 2, **characterised in that** the layer B contains a polyvinyl acetal having a proportion of polyvinyl alcohol groups equal to or greater than the proportion of polyvinyl alcohol groups of the polyvinyl acetal in layers A and C.

4. The film laminate according to one of claims 1 to 3, **characterised in that** adjacent layers have plasticiser contents that differ by at least 10 phr.

5. The film laminate according to one of claims 1 to 4, **characterised in that** adjacent layers contain polyvinyl acetals of which the proportions of polyvinyl alcohol groups differ by at most 2 % by weight.

6. The film laminate according to one of claims 1 to 5, **characterised in that** the polyvinyl (iso)acetals are obtained by reacting at least one polyvinyl alcohol with one or more aliphatic keto compounds containing 4 to 10 carbon atoms and having at least one branching at the alpha position or beta position to the keto group.

7. The film laminate according to one of claims 1 to 6, **characterised in that** the polyvinyl (n)acetals are obtained by reacting at least one polyvinyl alcohol with one or more aliphatic, unbranched keto compounds containing 2 to 10 carbon atoms.

8. The film laminate according to one of claims 1 to 7, **characterised in that** the film laminate is produced by co-extrusion of the layers.

9. The film laminate according to one of claims 1 to 8, **characterised in that** the film laminate is produced by combining the layers.

10. Use of the film laminates according to one of claims 1 to 9 for the production of glass/film laminate/glass composites for motor vehicles, aircraft, ships, architectural glazings, façade components, or for the production of photovoltaic modules.

## Revendications

1. Stratifié de feuilles, constitué d'au moins trois couches A, B et C dont chacune contient au moins un plastifiant et au moins un acétal de polyvinyle, **caractérisé en ce qu'**au moins une des couches A, B ou C contient, en tant qu'acétal de polyvinyle, au moins un (iso)acétal de polyvinyle dont la moyenne du degré de polymérisation est inférieure à 3.000 et dont la proportion de groupes d'alcool polyvinylique est comprise entre 10 et 25 % en poids et dont la proportion de groupes d'(iso)acétal de polyvinyle est comprise entre 50 et 80 % en poids, et que la couche B, disposée entre les couches A et C, comporte une proportion de plastifiants inférieure à 32 % en poids, et que les couches A, B et C se suivent et sont composées comme suit
- A contenant au moins un premier plastifiant et un premier (iso)acétal de polyvinyle dont la proportion de groupes d'(iso)acétal de polyvinyle est comprise entre 50 et 80 % en poids et dont la proportion de groupes d'alcool polyvinylique est comprise entre 10 et 25 % en poids, et
- B contenant au moins un deuxième plastifiant et un (n)acétal de polyvinyle dont la proportion de groupes d'alcool polyvinylique est comprise entre 10 et 25 % en poids, et
- feuille constitutive C, contenant au moins un troisième plastifiant et un deuxième (iso)acétal de polyvinyle dont la proportion de groupes d'(iso)acétal de polyvinyle est comprise entre 50 et 80 % en poids et dont la proportion de groupes d'alcool polyvinylique est comprise entre 10 et 25 % en poids.

2. Stratifié de feuilles, constitué d'au moins trois couches A, B et C dont chacune contient au moins un plastifiant et au moins un acétal de polyvinyle, **caractérisé en ce qu'**au moins une des couches A, B ou C contient, en tant qu'acétal de polyvinyle, au moins un (iso)acétal de polyvinyle dont la moyenne du degré de polymérisation est inférieure à 3.000 et dont la proportion de groupes d'alcool polyvinylique est comprise entre 10 et 25 % en poids et dont la proportion de groupes d'(iso)acétal de polyvinyle est comprise entre 50 et 80 % en poids, et que la couche B, disposée entre les couches A et C, comporte une proportion de plastifiants inférieure à 32 % en poids, et que les couches A, B et C se suivent et sont composées comme suit
- A, contenant au moins un premier plastifiant et un premier (n)acétal de polyvinyle dont la proportion de groupes d'alcool polyvinylique est comprise entre 10 et 25 % en poids, et
- B, contenant au moins un deuxième plastifiant et un (iso)acétal de polyvinyle dont la proportion de groupes d'(iso)acétal de polyvinyle est comprise entre 50 et 80 % en poids et dont la proportion de groupes d'alcool polyvinylique est comprise entre 10 et 25 % en poids, et
- C, contenant au moins un troisième plastifiant et un deuxième (n)acétal de polyvinyle dont la proportion de groupes d'alcool polyvinylique est comprise entre 10 et 25 % en poids.

3. Stratifié de feuilles selon la revendication 1 ou 2, **caractérisé en ce que** la couche B comporte un acétal de polyvinyle dont la proportion en groupes d'alcool polyvinylique est supérieure ou égale à la proportion de groupes d'alcool polyvinylique de l'acétal de polyvinyle présent dans les couches A et C.

4. Stratifié de feuilles selon l'une des revendications 1 à 3, **caractérisé en ce que** des couches adjacentes présentent des teneurs en plastifiants dont la différence ne de dépasse pas 10 pce.

5. Stratifié de feuilles selon l'une des revendications 1 à 4, **caractérisé en ce que** des couches adjacentes comportent des acétals de polyvinyle dont la différence, en ce qui concerne leur proportion de groupes d'alcool polyvinylique, ne de dépasse pas 2 % en poids.

6. Stratifié de feuilles selon l'une des revendications 1 à 5, **caractérisé en ce que** les (iso)acétals de polyvinyle sont obtenus en faisant réagir au moins un alcool polyvinylique avec un ou plusieurs composés cétoniques aliphatiques renfermant 4 à 10 atomes de carbone et présentant au moins une ramification en position alpha ou bêta par rapport au groupe cétone.

7. Stratifié de feuilles selon l'une des revendications 1 à 6, **caractérisé en ce que** les (n)acétals de polyvinyle sont obtenus en faisant réagir au moins un alcool polyvinylique avec un ou plusieurs composés cétoniques aliphatiques linéaires renfermant 2 à 10 atomes de carbone.

8. Stratifié de feuilles selon l'une des revendications 1 à 7, **caractérisé en ce que** ledit stratifié de feuilles est fabriqué par co-extrusion des couches.

9. Stratifié de feuilles selon l'une des revendications 1 à 8, **caractérisé en ce que** ledit stratifié de feuilles est fabriqué par assemblage des couches.

10. Utilisation des stratifiés de feuilles selon l'une des revendications 1 à 9 pour fabriquer des éléments composites de type verre / stratifié de feuilles / verre destinés à des véhicules à moteur, des avions, des navires, des vitrages architecturaux, des composants de façade, ou pour fabriquer des modules photovoltaïques.
